# FASCICULE DE BREVET EUROPEEN

(11) **EP 1 090 838 B1**
(45) Date de publication et mention de la délivrance du brevet: **26.11.2003**
(21) Numéro de dépôt: 00402732.2
(22) Date de dépôt: 05.10.2000
(51) Int. Cl.: B64D 27/26

(54) **Suspension à sécurité intégrée pour groupes motopropulseurs d'aéronefs**
Flugtriebwerksaufhängung mit integrierter Sicherheitsvorrichtung
Aircraft propulsion unit suspension with integrated fail-safe

(30) Priorité: 07.10.1999 FR 9912475
(43) Date de publication de la demande: 11.04.2001
(73) Titulaire: Snecma Moteurs, 75015 Paris (FR)
(72) Inventeur: Cousin, Antoine Emmanuel, 31240 L'Union (FR); Mazeaud, Georges, 91330 Yerres (FR); Picard, Jean-Louis, 77000 Vaux le Penil (FR)

(56) Documents cités:
- EP-A- 0 431 800
- EP-A- 0 741 074
- FR-A- 2 326 327
- FR-A- 2 755 943

## Description

L'invention concerne une suspension qui assure l'accrochage d'un groupe motopropulseur sur la cellule d'un avion, soit latéralement au fuselage, soit en suspension sous l'aile.

Elle concerne plus précisément une suspension du type décrit dans la demande de brévet FR-A-2 326 327 comportant une rotule montée sur un boîtier de rotule fixé sur le carter du groupe motopropulseur, ladite rotule étant susceptible de coulisser sur une broche ayant un axe géométrique perpendiculaire à l'axe du groupe et montée sur un support de broche solidaire de la cellule, et deux biellettes latérales articulées chacune respectivement sur ledit carter et sur une extrémité d'un bras de suspension porté par ledit support de broche.

Les efforts de poussée selon l'axe longitudinal sont repris par la broche. Dans le cas où le groupe est monté latéralement au fuselage, la broche reprend également les efforts verticaux selon l'axe Z, tandis que les biellettes reprennent les efforts latéraux selon l'axe Y. Si le groupe motopropulseur est suspendu sous l'aile, la broche reprend également les efforts latéraux selon l'axe Y, tandis que les efforts verticaux sont repris par les biellettes. Dans les deux cas de montage, le moment dû à la rotation du moteur est repris par la rotule et les biellettes.

Au cours du fonctionnement du groupe dans certaines conditions de vol, notamment au décollage, la broche et les biellettes sont soumises à des efforts considérables. Pour éviter un décrochage du groupe motopropulseur, les motoristes et les avionneurs sont dans l'obligation, soit de surdimensionner les éléments constitutifs de la suspension, soit de doubler certains éléments, afin de créer un double chemin de reprise des efforts, soit d'adjoindre des biellettes d'attente supplémentaires qui entrent en action en cas de bris soit de la broche, soit d'une biellette. Toutes ces solutions entraînent une forte augmentation de la masse et dans certains cas une augmentation du nombre de pièces.

Le but de l'invention est de proposer une suspension d'un groupe motopropulseur sur une cellule d'un aéronef qui possède une sécurité intégrée dans la région de la rotule, sans ajout de masse ou de pièces complémentaires.

Un autre but de l'invention est de proposer une suspension moteur à sécurité intégrée qui soit facile à mettre en oeuvre et qui ne nécessite que des modifications mineures de ses éléments constitutifs.

Le but est atteint selon l'invention par le fait que le boîtier de rotule comporte une portée cylindrique mâle logeant avec un jeu J1 dans un alésage ménagé dans le bras de suspension ou le support de broche et concentrique à l'axe géométrique de la broche, afin de limiter le déplacement du boîtier de rotule dans un plan perpendiculaire à l'axe géométrique de la broche en cas de rupture de cette dernière, et par le fait qu'il est en outre prévu des moyens de contact pour empêcher la rotule de s'échapper de la broche en cas de rupture d'une biellette.

Avantageusement, les moyens de contact pour empêcher la rotule de s'échapper de la broche sont constitués par des surfaces, sensiblement perpendiculaires à l'axe géométrique de la broche et espacées d'une distance J2, d'une première butée et d'une deuxième butée, solidaires respectivement du boîtier de rotule et du support de broche.

Selon un premier mode de réalisation, la deuxième butée est constituée par un épaulement annulaire formé à l'extrémité libre de la broche et s'étendant radialement vers l'extérieur, ledit épaulement étant espacé de la distance J2 de la face interne du boîtier de broche, qui constitue la première butée.

Avec ce premier mode de réalisation, les seules modifications apportées aux éléments de la suspension concernent la formation d'un épaulement sur la broche, la présence d'une portée cylindrique mâle sur le boîtier de rotule et la formation d'un alésage dans le bras de suspension.

Selon un deuxième mode de réalisation des butées, le boîtier de rotule est fixé sur le carter au moyen de vis ayant des axes parallèles à l'axe géométrique de la broche, lesdites vis ayant des embases traversant avec un jeu J1 des orifices ménagés dans une collerette formée sur le support de broche et des têtes de vis écartées de la face externe de la collerette de la distance J2, lesdites têtes de vis ayant un diamètre supérieur au diamètre des orifices et constituant la première butée, tandis que la collerette constitue la deuxième butée.

D'autres avantages et caractéristiques de l'invention ressortiront à la lecture de la description suivante faite à titre d'exemple et en référence aux dessins annexés dans lesquels :
- la figure 1 montre schématiquement les suspensions avant et arrière d'un groupe motopropulseur accroché latéralement au fuselage d'un aéronef ;
- la figure 2 montre schématiquement les suspensions avant et arrière d'un groupe motopropulseur fixé sous l'aile d'un aéronef ;
- la figure 3a est une vue en coupe, selon un plan transversal médian perpendiculaire à l'axe X du groupe motopropulseur, de la suspension avant selon un premier mode de réalisation de l'invention ;
- la figure 3b est une vue dans une direction parallèle à l'axe de la broche, de la suspension avant de la figure 3a ;
- la figure 4 montre la configuration prise par la suspension avant de la figure 3a en cas de rupture d'une biellette ;
- la figure 5 montre la configuration prise par la suspension avant de la figure 3a en cas de rupture de la broche ;
- la figure 6 est une coupe, selon un plan transversal passant par l'axe de la broche, et à grande échelle, de la zone médiane de la suspension avant de la figure 3a;
- la figure 7 est semblable à la figure 6 et montre un deuxième mode de réalisation des moyens destinés à empêcher la rotule de s'échapper de la broche.

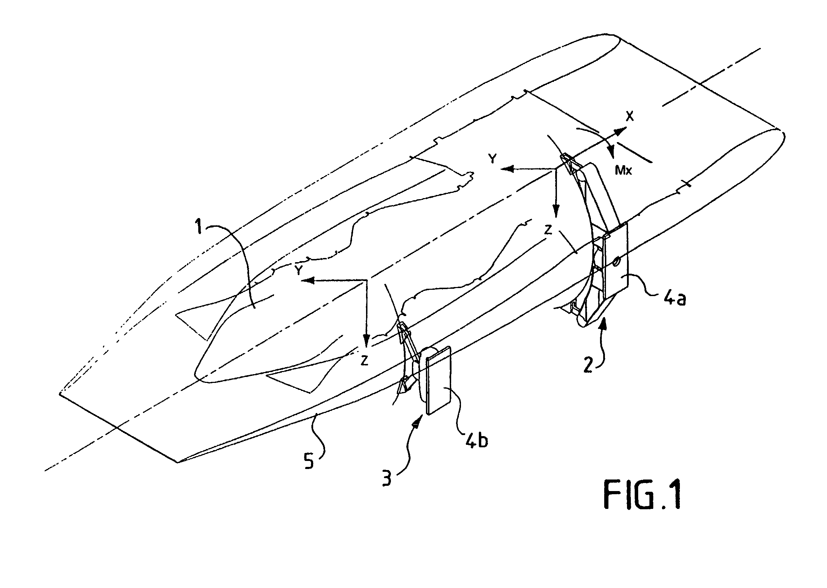

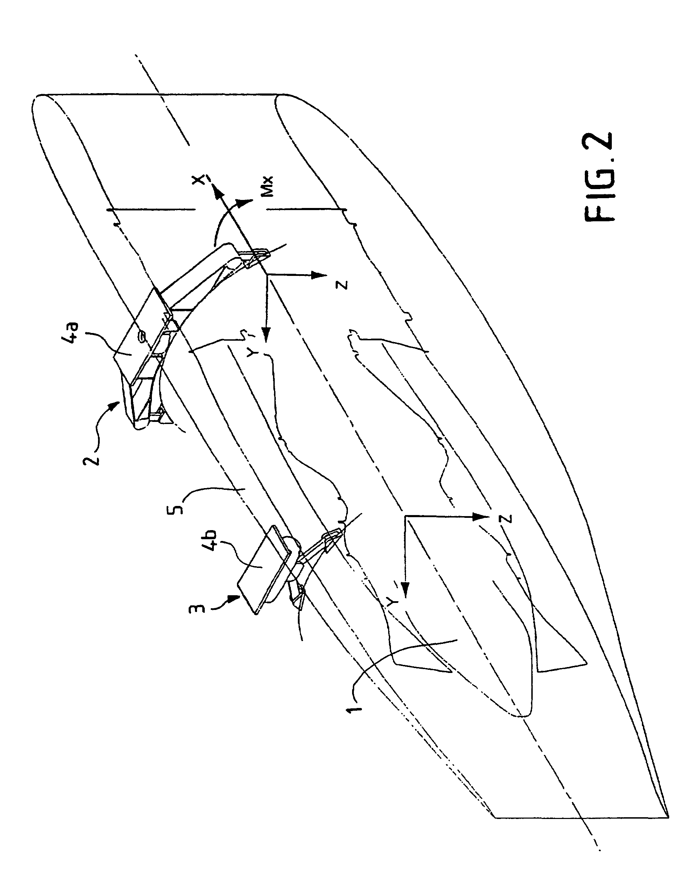

Les figures 1 et 2 montrent schématiquement un groupe motopropulseur 1 d'axe longitudinal X équipé d'un dispositif de suspension avant 2, objet de l'invention, et d'un dispositif de suspension arrière 3, qui présentent chacun une platine, 4a à l'avant, et 4b à l'arrière, servant à la fixation du groupe motopropulseur 1 sur une armature de la cellule d'un aéronef, soit le fuselage (figure 1), soit l'aile (figure 2). Sur les figures 1 et 2, on a également représenté l'axe de référence vertical Z et l'axe de référence transversal Y. Les trois axes de référence X, Y, Z sont orthogonaux entre eux.

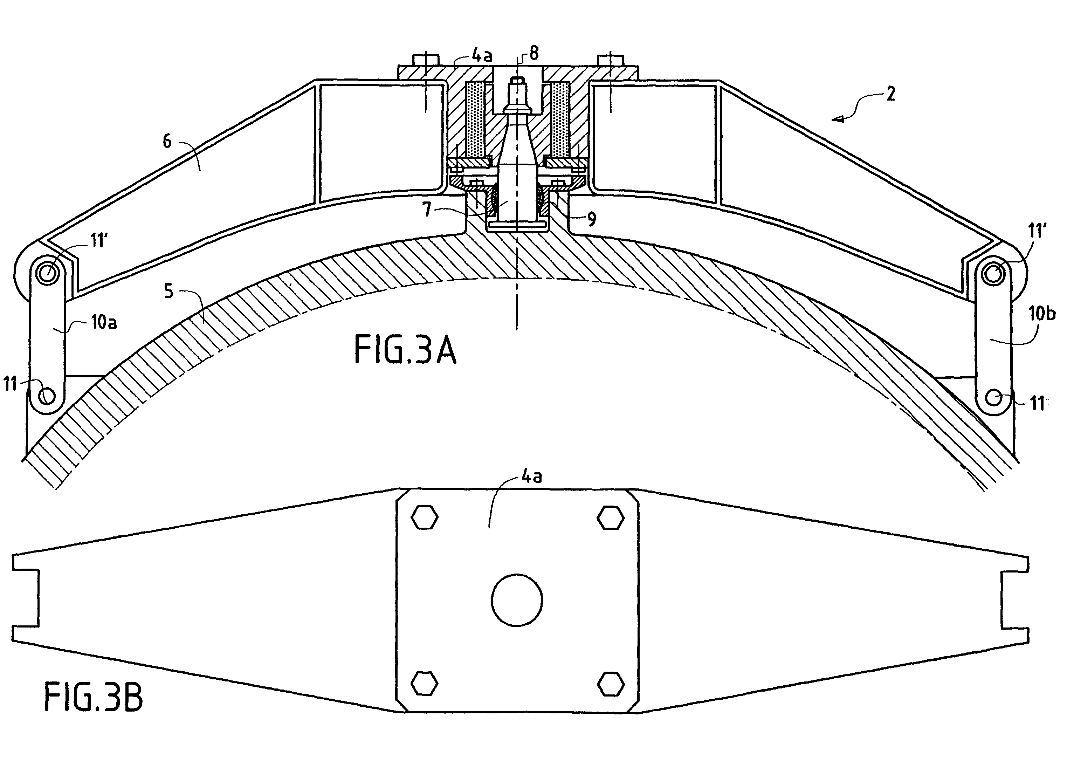

Ainsi que cela se voit plus clairement sur les figures 3a à 5, le dispositif de suspension avant 2 comporte, outre la platine 4a, un bras de suspension 6 et une broche 7, rigidement liés à la platine 4a. L'axe géométrique 8 de la broche 7 est perpendiculaire à l'axe de référence longitudinal X et est confondu avec l'axe vertical Z, lorsque le groupe motopropulseur est suspendu sous une aile. Cet axe géométrique 8 est confondu avec l'axe transversal Y, lorsque le groupe motopropulseur est accroché au fuselage.

La liaison entre le dispositif de suspension avant 2 et le carter 5 du groupe motopropulseur est réalisée au moyen d'une rotule 9 susceptible de coulisser sur la broche 7 et de deux biellettes latérales 10a et 10b dont les extrémités sont articulées respectivement en 11 sur le carter 5 et en 11' sur une extrémité du bras de suspension 6.

La rotule 9 est portée par un boîtier de rotule 10 fixée sur des oreilles 11a, 11b, formées sur le carter 5. Le boîtier de rotule 10 présente une portée cylindrique mâle 12 de révolution autour de l'axe géométrique 8 de la broche 7.

La platine 4a est prolongée vers le carter 5 par un manchon 13 cylindrique et de révolution autour de l'axe géométrique 8 qui loge dans un alésage 14 ménagé dans la partie médiane du bras de suspension 6.

La broche 7 est montée sur un support de broche 15a monté dans le manchon 13 avec interposition d'une douille en élastomère 16a servant à isoler l'avion des vibrations.

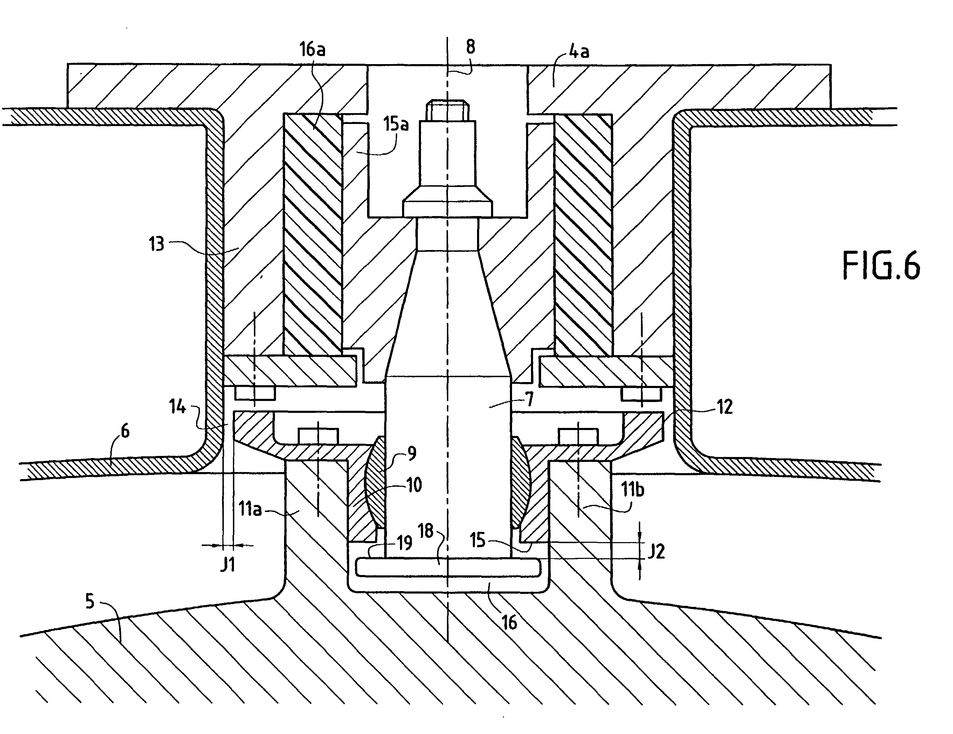

Selon un premier mode de réalisation, montré en détail sur la figure 6, l'alésage 14 s'étend vers le carter 5 sur une distance supérieure à la hauteur du manchon 13. Cet alésage 14 a un rayon légèrement supérieur au rayon de la portée cylindrique mâle 12 du boîtier de rotule 10, et la partie interne de l'alésage 14 entoure la portée cylindrique mâle 12, la partie interne et la partie externe des constituants étant définies par rapport à l'axe X de rotation du groupe motopropulseur 1. Il existe ainsi un jeu J1 entre la paroi de l'alésage 14 et la portée cylindrique mâle 12 du boîtier de rotule.

Les oreilles 11a et 11b du carter 5, le carter 5 et la face interne 15 du boîtier de rotule 10 définissent un espace 16 dans lequel loge l'extrémité libre de la broche 7. Cette extrémité est pourvue d'un épaulement annulaire 18 qui s'étend radialement vers l'extérieur par rapport à l'axe géométrique 8 de la broche 7. Cet épaulement annulaire 18 est situé à distance du carter 5, et sa face externe 19 est distante de la face interne 15 du boîtier de rotule 10 d'une valeur J2.

En fonctionnement normal, la rotule 9 peut coulisser librement le long de la broche 7 pour tenir compte des dilatations du carter 5 et du bras de suspension 6. La valeur J2 est par le fait même variable. Cette valeur J2 est calculée de telle manière que, en fonctionnement normal, la face interne 15 du boîtier de rotule ne vienne pas reposer sur la face externe 19 de l'épaulement 18.

L'écart J1 entre les rayons de la portée cylindrique mâle 12 du boîtier de rotule 10, et le rayon de l'alésage 14 tient également compte des dilatations prévisibles du boîtier de rotule 10, de telle manière qu'en fonctionnement normal, le boîtier de rotule 10 soit libre de coulisser le long de la broche 7.

Les jeux J1 et J2 définis ci-dessus constituent des moyens de sécurité, intégrés dans le dispositif de suspension avant 2, en cas de rupture soit d'une biellette 10a, 10b, soit de la broche 7.

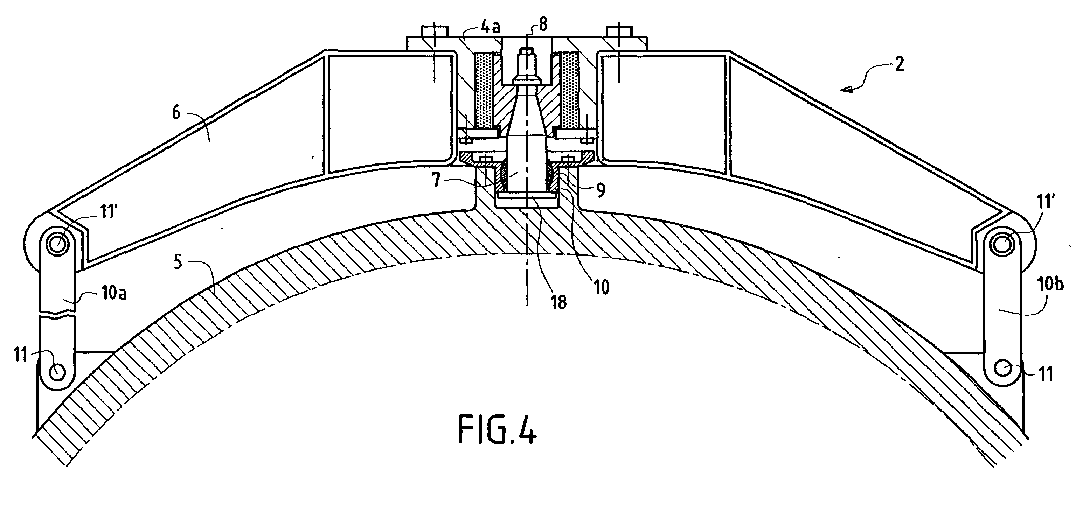

La figure 4 montre la configuration que prend le carter 5 par rapport au bras de suspension 6 dans le cas de la rupture de la biellette de gauche 10a. Dans cette configuration, le carter 5 pivote autour de la biellette de droite 10b, et la rotule 9 coulisse le long de la broche 7 d'une valeur maximale vers l'intérieur ou l'extérieur par rapport à l'axe de rotation du groupe motopropulseur 1. Lorsque la rotule 9 coulisse vers l'extérieur, la face d'extrémité de la broche 7 et de l'épaulement 18 vient en butée contre le carter 5.

Si en revanche la rotule 9 coulisse vers l'intérieur, la face externe 19 de l'épaulement 18 vient en contact avec la face interne 15 du boîtier de rotule 10, ce qui empêche la rotule 9 de s'échapper de la broche 7 et limite le déplacement du boîtier de rotule 10.

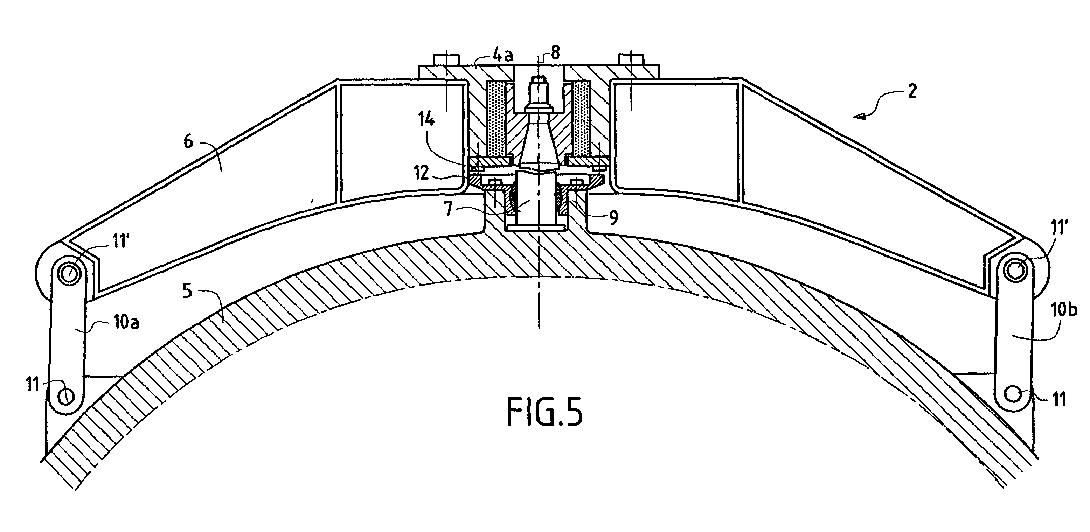

Dans le cas de bris de la broche 7, ainsi que cela est montré sur la figure 5, la portée cylindrique mâle 12 vient en appui sur la paroi du bras de suspension 6 qui délimite l'alésage 14. Le boîtier de rotule 10 subit ainsi un déplacement latéral limité à la valeur de J1.

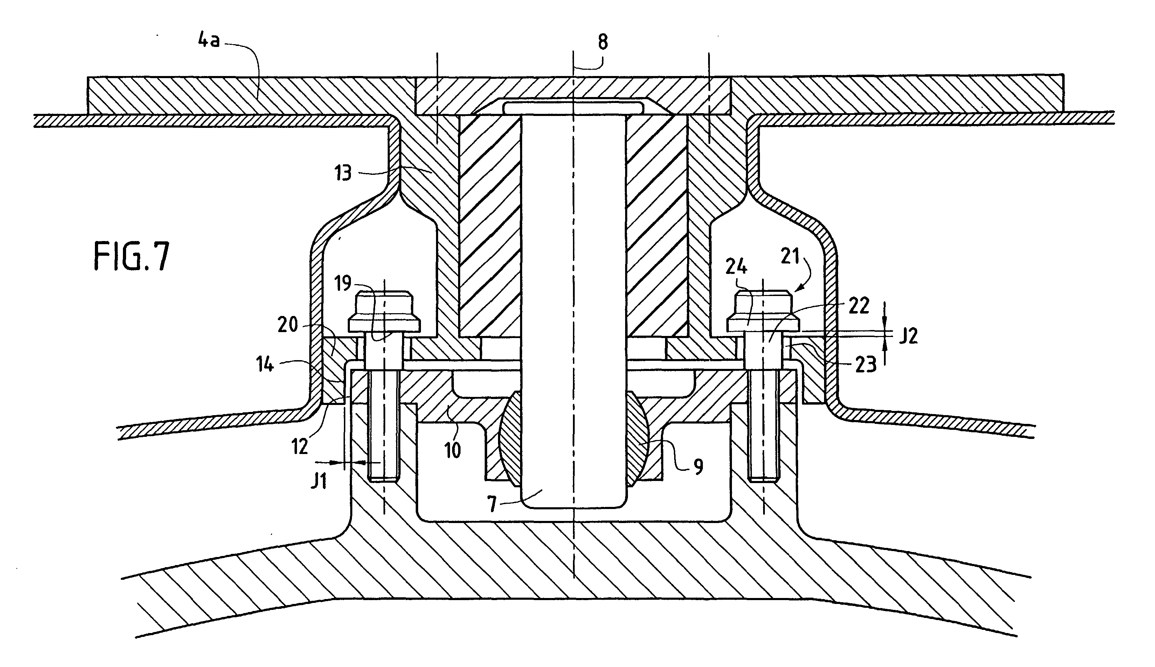

La figure 7 montre une variante de réalisation de l'invention. Dans cette variante la platine 4a est prolongée vers le carter 5 par un manchon 13 cylindrique qui se termine à son extrémité interne par une collerette 20, cette collerette ayant également une portée cylindrique extérieure en appui contre un alésage ménagé dans la portion médiane du bras de suspension 6, et une portée cylindrique intérieure 14 disposée à une distance J1 de la portée cylindrique mâle 12 du boîtier de rotule 10. Le boîtier de rotule 10 porte une rotule 9 susceptible de coulisser sur la broche 7 disposée à l'intérieur du manchon 13 avec interposition d'une douille en élastomère 16a qui sert à isoler l'avion des vibrations.

Le boîtier de rotule 10 est fixé sur les oreilles 11a et 11b du carter 5 par une pluralité de vis 21 qui ont des axes parallèles à l'axe géométrique 8 de la broche 7, et des embases 22 qui traversent avec un jeu J1 des orifices 23 ménagés en correspondance dans la collerette 20. Les embases 22 sont disposées au-dessus de la face externe du boîtier de rotule 10, et sont surmontées de têtes de vis 24 qui ont un diamètre supérieur au diamètre des orifices 23. La face interne 19 des têtes de vis est située en fonctionnement à une distance J2 de la face externe de la collerette 20. Les embases 22 ont une longueur supérieure à l'épaisseur de la collerette 20. En cas de bris de la broche 7, le boîtier de rotule 10 se décale d'une distance J1, et sa portée cylindrique mâle est en butée contre l'alésage 14. En outre, les embases 22 sont en butée contre les bords des orifices 23. En cas de rupture d'une biellette 10a ou 10b, les têtes de vis 24 empêchent la rotule 9 de s'échapper de la broche 7, car leurs faces internes 19 viennent en appui contre la face externe de la collerette 20.

Il est à noter que la face externe du boîtier de rotule 10 est écartée de la face interne de la collerette 20 et vient en appui sur cette dernière, lorsque le carter 5 se rapproche du bras de suspension 6 en cas de rupture d'une biellette.

## Revendications

1. Suspension pour assurer l'accrochage d'un groupe motopropulseur (1) sur la cellule d'un aéronef du type comportant une rotule (9) montée sur un boîtier de rotule (10) susceptible d'être fixé sur le carter (5) dudit groupe motopropulseur (1), ladite rotule (9) étant susceptible de coulisser sur une broche (7) ayant un axe géométrique (8) perpendiculaire à l'axe X du groupe une fois montée et montée sur un support de broche (13, 4a) susceptible d'être monté solidaire de la cellule, et deux biellettes latérales (10a, 10b) susceptible d'être articulées chacune respectivement sur ledit carter (5) et sur une extrémité d'un bras de suspension (6) porté par ledit support de broche (13, 4a),
**caractérisée par le fait que** le boîtier de rotule (10) comporte une portée cylindrique mâle (12) logeant avec un jeu J1 dans un alésage (14) ménagé dans le bras de suspension (6) ou le support de broche (13, 4a) et concentrique à l'axe géométrique (8) de la broche (7), afin de limiter le déplacement du boîtier de rotule (10) dans un plan perpendiculaire à l'axe géométrique (8) de la broche (7) en cas de rupture de cette dernière, et **par le fait qu'**il est en outre prévu des moyens de contact (15, 19) pour empêcher la rotule (9) de s'échapper de la broche (7) en cas de rupture d'une biellette (10a, lOb).

2. Suspension selon la revendication 1, **caractérisée par le fait que** les moyens de contact (15, 19) pour empêcher la rotule (9) de s'échapper de la broche (7) sont constitués par des surfaces, sensiblement perpendiculaires à l'axe géométrique (8) de la broche (7) et espacées d'une distance J2, d'une première butée (10, 18) et d'une deuxième butée (20, 24), solidaires respectivement du boîtier de rotule (10) et du support de rotule (13, 4a).

3. Suspension selon la revendication 2, **caractérisée par le fait que** la première butée est constituée par un épaulement (18) annulaire formé à l'extrémité libre de la broche (7) et s'étendant radialement vers l'extérieur, ledit épaulement (18) étant espacé de la distance J2 de la face interne (15) du boîtier de broche (10).

4. Suspension selon la revendication 2, **caractérisée par le fait que** le boîtier de rotule (10) est susceptible d'être fixé sur le carter (5) au moyen de vis (21) ayant des axes parallèles à l'axe géométrique (8) de la broche (7), lesdites vis (21) ayant des embases (22) traversant avec un jeu J1 des orifices (23) ménagés dans une collerette (20) formée sur le support de broche (13) et des têtes de vis (24) écartées de la face externe de la collerette (20) de la distance J2, lesdites têtes de vis (24) ayant un diamètre supérieur au diamètre des orifices (23) et constituant la seconde butée, tandis que ledit épaulement (18) constitue la première butée.

## Patentansprüche

1. Aufhängung zur Befestigung einer Triebwerkgruppe (1 ) an der Zelle eines Flugzeugs
mit einem Kugelgelenk (9), das an einem an dem Gehäuse (5) der Triebwerkgruppe befestigbaren Kugelgelenkkasten (10) montiert ist, wobei das Kugelgelenk (9) auf einer Spindel (7) gleiten kann, die eine zur Achse X der Triebwerkgruppe senkrechte geometrische Achse (8) aufweist und an einem Spindelhalter (13, 4a) montiert ist, der an der Zelle fest montierbar ist,
und mit zwei seitlichen Schwingarmen (10a, 10b), die jeweils mit dem genannten Gehäuse (1) bzw. mit einem Ende eines von dem Spindelhalter (13, 4a) getragenen Aufhängungsarm (6) gelenkig verbindbar sind,
**dadurch gekennzeichnet,**
**daß** der Kugelgelenkkasten (10) eine männliche, zylindrische Lagerfläche (12) aufweist, die mit einem Spiel J1 in einer Bohrung (14) angeordnet ist, die in dem Aufhängungsarm (6) oder dem Spindelhalter (13, 4a) konzentrisch zur geometrischen Achse (8) der Spindel (7) ausgebildet ist, um die Verschiebung des Kugelgelenkkastens (10) in einer Ebene senkrecht zur geometrischen Achse (8) der Spindel (7) im Falle eines Bruch der letzteren zu begrenzen,
und **daß** ferner Kontaktmittel (15, 19) vorgesehen sind, um zu verhindern, daß das Kugelgelenk (9) sich im Falle des Bruchs eines Schwingarms (10a, 10b) von der Spindel (7) löst.

2. Aufhängung nach Anspruch 1, **dadurch gekennzeichnet, daß** die Kontaktmittel (15, 19) zur Verhinderung des Lösens des Kugelgelenks (9) von der Spindel (7) von Flächen gebildet werden, die annähernd senkrecht zur geometrischen Achse (8) der Spindel (7) verlaufen und in einem Abstand J2 von einem ersten Anschlag (10, 18) und einem zweiten Anschlag (20, 24) angeordnet sind, die mit dem Kugelgelenkkasten (10) bzw. mit dem Spindelhalter (13, 4a) fest verbunden sind.

3. Aufhängung nach Anspruch 2, **dadurch gekennzeichnet, daß** der erste Anschlag von einer ringförmigen Schulter (18) gebildet ist, die an dem freien Ende der Spindel (7) ausgebildet ist und radial nach außen ragt, wobei diese Schulter von der innenfläche (15) des Kugelgelenkkastens (10) den Abstand J2 hat.

4. Aufhängung nach Anspruch 2, **dadurch gekennzeichnet, daß** der Kugelgelenkkasten (10) an dem Gehäuse (5) mit Hilfe von Schrauben (21) befestigbar ist, deren Achsen parallel zu der geometrischen Achse (8) der Spindel (7) verlaufen, wobei diese Schrauben (21 ) Schafte (22) besitzen, die Öffnungen (23), welche in einem an dem Spindelhalter (13) ausgebildeten Kragen (29) angebracht sind, mit einem Spiel J1 durchdringen, sowie Schraubenköpfe (24), die von der Außenfläche des Kragens (20) den Abstand J2 haben, wobei die Schraubenköpfe (24), die einen größeren Durchmesser haben als die Öffnungen (23), den zweiten Anschlag bilden, während die genannte Schulter (18) den ersten Anschlag bildet.

## Claims

1. Suspension for attaching a propulsion unit (1) to the cell of an aircraft of the type comprising a ball (9) mounted on a ball socket (10) able to be fixed to the casing (5) of the said propulsion unit (1), the said ball (9) being able to slide on a pin (7) having a geometric axis (8) perpendicular to the axis X of the unit once mounted and mounted on a pin support (13, 4a) able to be mounted secured to the cell, and two lateral connecting rods (10a, 10b) able each to be articulated respectively to the said casing (5) and to one end of a suspension arm (6) borne by the said pin support (13, 4a),
**characterized in that** the ball socket (10) has a male cylindrical bearing surface (12) housed with clearance J1 in a bore (14) formed in the suspension arm (6) or the pin support (13, 4a) and concentric with the geometric axis (8) of the pin (7) so as to limit the travel of the ball socket (10) in a plane perpendicular to the geometric axis (8) of the pin (7) should the latter rupture, and **in that** there are also provided contact means (15, 19) for preventing the ball (10) from escaping from the pin (7) should a connecting rod (10a, 10b) break.

2. Suspension according to Claim 1, **characterized in that** the contact means (15, 19) for preventing the ball (9) from escaping from the pin (7) consist of surfaces, roughly perpendicular to the geometric axis (8) of the pin (7) and spaced apart by a distance J2, belonging to a first stop (10, 18) and to a second stop (20, 24) that are respectively secured to the ball socket (10) and to the ball joint support (13, 4a).

3. Suspension according to Claim 2, **characterized in that** the first stop consists of an annular shoulder (18) formed at the free end of the pin (7) and running radially outwards, the said shoulder (18) being spaced by the distance J2 from the internal face (15) of the pin socket (10).

4. Suspension according to Claim 2, **characterized in that** the ball socket (10) is able to be fixed to the casing (5) by means of screws (21) having axes parallel to the geometric axis (8) of the pin (7), the said screws (21) having bases (22) passing with clearance J1 through orifices (23) formed in a circular flange (20) formed on the pin support (13), and screw heads (24) separated from the external face of the circular flange (20) by the distance J2, the said screw heads (24) having a diameter greater than the diameter of the orifices (23) and constituting the second stop, while the said shoulder (18) constitutes the first stop.
